# EUROPEAN PATENT APPLICATION

(11) **EP 1 469 540 A2**
(43) Date of publication of application: **20.10.2004**
(21) Application number: 04008895.7
(22) Date of filing: 14.04.2004
(51) Int. Cl.: H01M 8/02

(54) **Fuel cell and method of producing a fuel cell**

(30) Priority: 14.04.2003 JP 2003108881
(71) Applicant: MATSUSHITA ELECTRIC INDUSTRIAL CO., LTD., Kadoma-shi, Osaka 571-8501 (JP)
(72) Inventor: Tsuji, Yoichiro, Katano-shi Osaka 576-0036 (JP); Hori, Yoshihiro, Ikoma-shi Nara 630-0141 (JP); Yamauchi, Masaki, Neyagawa-shi Osaka 572-0004 (JP); Uchida, Makoto, Hirakata-shi Osaka 573-1145 (JP)
(74) Representative: Patentanwälte Leinweber & Zimmermann

(57) **Abstract**

The invention refers to a fuel cell comprising an electrode, said electrode having an edge portion defining an inner portion and said electrode being under pressure.

According to the invention, at least a part of said edge portion is under less pressure as compared to at least a part of said inner portion.

## Description

### The technical field to which the invention belongs

This invention relates to a polymer electrolyte fuel cell. In more detail, the invention relates to the advantageous improvements of a separator plate sandwiching the membrane-electrode assembly comprising a polymer electrolyte membrane and electrodes that sandwich the polymer electrolyte membrane.

### Description of the Prior Art

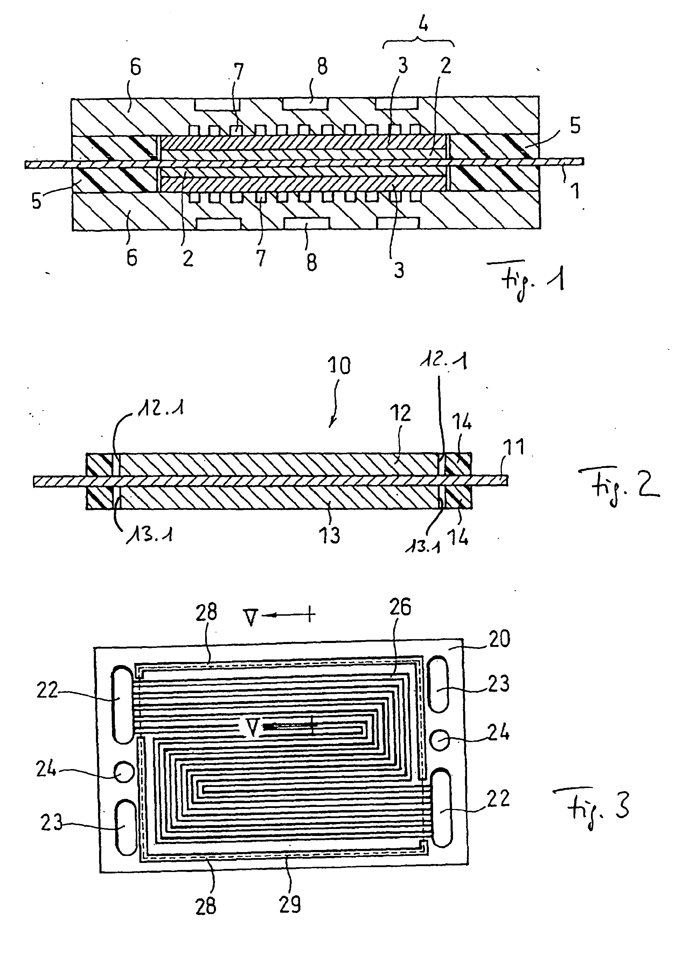

A polymer electrolyte fuel cell is designed to generate electricity and heat simultaneously by electrochemically reacting fuel gas such as hydrogen with an oxidizing agent such as air using a gas diffusion electrode. The commonly used constitution of such a polymer electrolyte fuel cell is shown in Fig. 1. In Fig. 1, the catalyst layer 2, whose main component is carbon powder that supported a platinum group metal catalyst, adhered on both surfaces of the polymer electrolyte membrane 1 that selectively transports protons, has been placed. A pair of gas diffusion layers 3 possessing both permeability to air and conductivity adhered on the exterior surface of the catalyst layer 2, is placed. The electrode 4 is constituted by this gas diffusion layer 3 and the catalyst layer 2. In general, a gas diffusion layer is formed on a porous substrate comprising carbon, and carbon powder is formed as a fluorocarbon resin layer. Carbon paper, cloth, felt and the like are commonly used for the carbon substrate. The substance integrating this catalyst layer and the gas diffusion layer are referred to as membrane-electrode assembly (MEA). While the electrically conductive separator plate 6 mechanically secures MEAs formed by the electrode 4 and the polymer electrolyte membrane 1, it also connects adjacent MEAs to each other in series and then supplies reactant gas to the electrode, with the gas passage 7 for carrying away gas generated by the reaction and/or surplus gas being positioned on the surface opposite the electrode.

Although a gas passage can be formed separately from the electrically conductive separator plate 6, the method by which a groove is formed on the surface of the separator plate as a gas passage is more commonly used. On the other surface of the electrically conductive separator plate 6, the cooling water passage 8 is formed that circulates cooling water for maintaining the cell temperature at a constant level. Thus, by circulating cooling water, the heat energy generated by the reaction can be utilized in the form of hot water and the like. In such laminated cells, a so-called internal manifold is commonly used that ensures having a gas inlet opening and an exhaust opening and, furthermore, a cooling water inlet opening and a drain opening within the laminated cells.

The gasket 5 having a sealing function is formed to prevent an antithetical gas leak or an external gas leak respectively in the peripheral part of the electrode 4. O-rings, rubber sheets, and composite sheets of elastomeric resins and synthetic resins are used as a gasket. From the point of view of MEA handleability, a gasket of a composite material system having a certain rigidity and MEA are often integrated. With a polymer electrolyte fuel cell stack, the entire cell is required to be regularly tightened as described above to reduce the electrical contact resistance of components such as a bipolar plate. To accomplish this, it is effective to: stack a large number of electric cells in layers in one direction; place end plates at both ends of the cells respectively; and secure the two plates using a fastening member. For a tightening method, it is preferable for electrical cells to be tightened in-plane as uniformly as possible. From the point of view of mechanical strength, metal materials such as stainless steel are used for the fastening members such as end plates.

### Problem(s) to be solved by the Invention

Membranes used for such fuel cells are very thin and are susceptible to mechanical damage. For example, they may be damaged even by the section of a gasket and the like. Consequently, attempts have been made to prevent damage to membranes by devising means, for example, for changing the shape of a gasket cross-section (see patent documents 1 and 2).

At the same time, a gas diffusion layer integrated into a catalyst layer releases carbon fibers as burr during the cutting operation, which tend to damage the gas diffusion layer, particularly in the peripheral part. Where the substrate is carbon paper and the thickness is thin, microscopic cracks can develop in the peripheral part, which can also cause damage to the electrolyte membrane. Once the membrane is damaged, direct short circuits or gas leaks may occur in the damaged part, which in turn cause the degradation of the electric cells.

### Patent document 1

Japanese published unexamined patent application JP2001-351651A publication

### Patent document 2

Japanese published unexamined patent application JP2002-329504A publication

### Means for solving the Problem

According to the invention, the above problems are solved by a fuel cell comprising an electrode, said electrode having an edge portion defining an inner portion and said electrode being under pressure, characterised in that at least a part of said edge portion is under less pressure as compared to at least a part of said inner portion.

By reducing said pressure exerted on said edge portion, the danger of mechanical damage of the membrane is reduced, while sufficient pressure may be exerted to the inner portion in order to make the fuel cell have a condition suitable for optimum operation thereof.

Preferably, what is provided is a pressure means adapted to exert said pressure on said electrode. In the case of a sheet-like and/or flat MEA, said pressure means is preferably realised in the form of a plate.

Said pressure means is preferably adapted to separate the fuel cell from a neighbour fuel cell in a fuel cell stack. In other words, said pressure means is a separator plate, particularly an electrically conductive separator plate.

According to a particularly preferred embodiment of the invention, said pressure means comprises a recess facing and overlapping said edge portion and extending parallel therewith. By such a recess it is possible to exclude said edge portion from said exertion of pressure acting on the inner portion of the electrode and thereby on the membrane.

Preferably, said recess has a wedge-like contour. Thereby, the pressure gradually changes in outward direction, preventing any damage to the membrane as well as to a gas diffusion layer in the electrode.

However, said recess may also have a hemicycle or oblong contour. Furthermore, other contours are possible in order to realize the present invention.

According to a further preferred embodiment of the invention, said electrode comprises a gas diffusion layer, wherein the depth of said recess is 80 to 120 % of the thickness of said gas diffusion layer under said pressure, i.e. under operating pressure.

According to a further preferred embodiment of the invention, no recess overlaps with a channel adapted to supply a fluid to said electrode or to remove a fluid therefrom. To this end, both gases and liquid substances (water) are regarded as fluids. Thereby, said fluids are prevented from flowing within said recess.

Preferably, what is provided is a sealing means abutting on said pressure means with a first side and abutting on a membrane of said fuel cell with a second side. In other words, said sealing means surrounds said electrode outside thereof and outside of said recess.

Additionally or alternatively, a sealing means is provided abutting on said pressure means with a first side and abutting on said electrode with a second side. In other words, this sealing means is provided inside or outside of said recess, seen in a plane parallel to said electrode.

In this case, it is advantageous to densify said electrode in a region on which said sealing means abuts, in order to prevent said electrode and particularly a gas diffusion layer included therein from collapsing.

The fuel cell according to the invention is preferably a polymer electrolyte fuel cell.

In other words, the polymer electrolyte fuel cell of this invention is characterised by having a concave portion in a part that contacts the peripheral edge of the gas diffusion layer of at least one side of an electrically conductive separator plate, wherein the said polymer electrolyte fuel cell is equipped with a pair of electrodes comprising a polymer electrolyte membrane and a catalyst layer and a gas diffusion layer between which said polymer electrolyte membrane is sandwiched, an anode side electrically conductive separator plate having a gas passage supplying fuel gas on one side of said electrode, and a cathode side electrically conductive separator plate having a gas passage supplying oxidizing gas on the other side of said electrode.

It is preferred that the depth of the concave portion of said separator plate is 80 - 120% of the dimension of the gas diffusion layer when it is compressed by the fastening pressure of fuel cells.

Preferably, the invention provides the following:
- A polymer electrolyte fuel cell, in which a gasket is placed outwards of the concave portion of said separator plate.
- A polymer electrolyte fuel cell, wherein the concave portion of said separator plate is decoupled on a part where said gas passage of said separator plate intersects with the gas diffusion layer and said concave portion is not communicating with said gas passage.
- A polymer electrolyte fuel cell, in which a gasket is placed inwards of the concave portion of said separator plate.
- A polymer electrolyte fuel cell, in which the gas diffusion layer of said electrode is impregnated with a dense substance against which a gasket is placed such that it abuts.

A gasket may be placed outwards of said concave portion of the separator plate as sealing mechanism for this fuel cell. In this case, a concave portion is decoupled on a part where a gas passage leading to a power generation part from a manifold intersects with the gas diffusion layer, not allowing said concave portion to communicate with the gas passage. Accordingly, it is preferable for gas to be prevented from flowing through the concave portion.

At the same time, a gasket may also be placed inwards of said concave portion of the separator plate. In this case, it is preferable for the gas diffusion layer to be impregnated with a dense substance such as a resin to which a gasket is placed such that it abuts.

In addition to the above-detailed fuel cell, the present invention also provides a method of producing a fuel cell comprising an electrode, said electrode having an edge portion defining an inner portion, said method including the step of applying pressure to said electrode, characterised in that a pressure applied to at least a part of said edge portion is smaller than a pressure applied to at least a part of said inner portion.

In other words, according to the present invention, even during the production of the fuel cell, the pressure exerted on the edge portion is reduced with view to the pressure exerted on the inner portion, in order to prevent the electrode as well as the membrane from damages.

Preferably, a contour of a means for applying said pressure does at least partially not overlap said edge portion.

In other words, a pressure-applying tool is contoured to have a pressure-applying face smaller than the electrode so that not exerting excessive pressure to at least a part of the edge portion of the electrode.

Preferably, this invention provides a method for the production of a polymer electrolyte fuel cell characterised in that an electrode is integrated with an electrolyte membrane under the condition that the pressure force of the peripheral part of a gas diffusion layer is less than that of other midsections in the first process, wherein the method for the production of fuel cells consists of the first process of integrating a pair of electrodes comprising catalyst layers and gas diffusion layers and a polymer electrolyte membrane, and the second process of forming a fuel cell by sandwiching the integrated membrane-electrode assembly between a pair of electrically conductive separator plates.

### Embodiments of the Invention

In the polymer electrolyte fuel cell of the invention as described above, a concave portion is formed on the part where a separator plate makes contact with the peripheral part of the gas diffusion layer. For this reason, the pressure applied by the separator plate onto the peripheral part of the gas diffusion layer is reduced or becomes non-existent.

In the cell stack assembling process, it is common for electrodes and the gas diffusion layer to be integrated by compression prior to the process of sandwiching MEA with separator plates. Even in this case, according to this invention, the peripheral part of the gas diffusion layer can be integrated under little or no pressure.

During the cutting operation, burrs may be formed on the peripheral part of the gas diffusion layer, which in turn cause damage to the electrolyte membrane when the layer and the membrane are compressed. According to this invention, such effect can be minimised.

Hereinafter embodiments of this invention are explained with reference to the drawings.

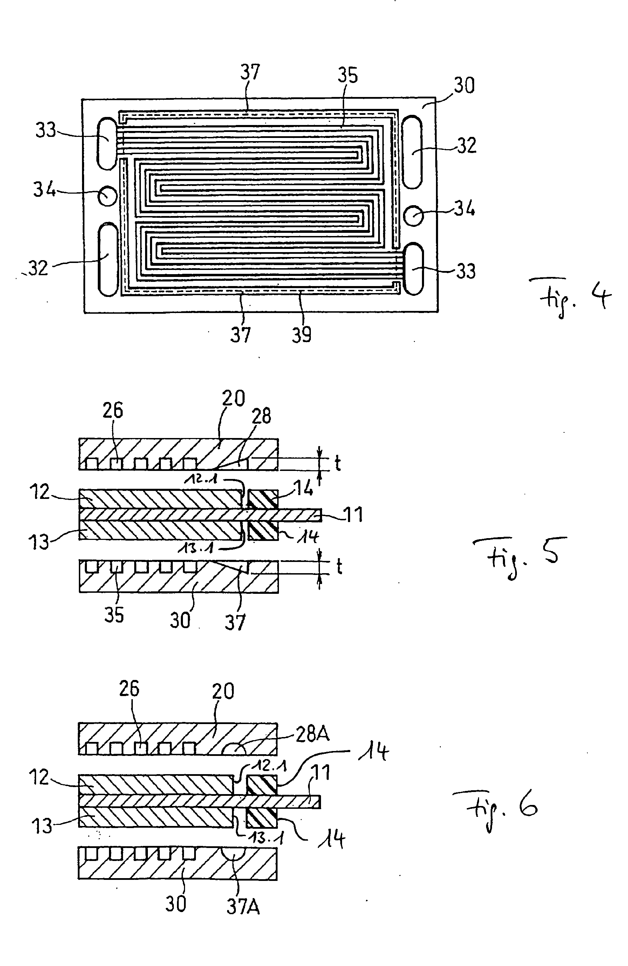

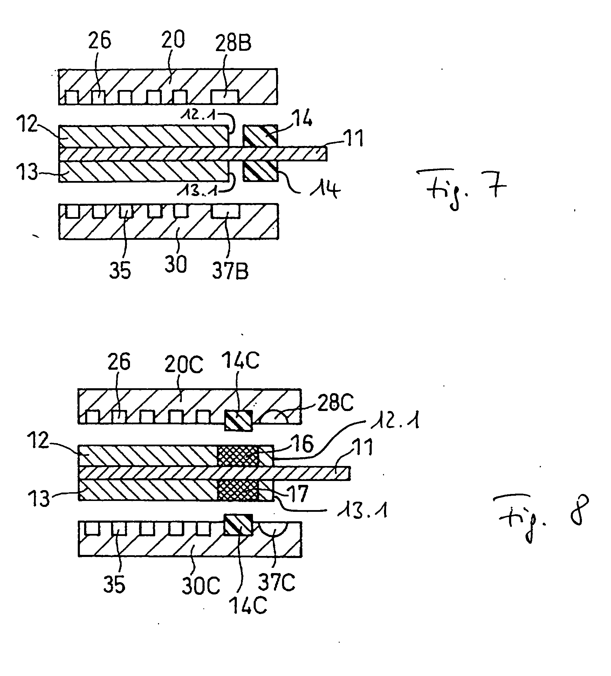

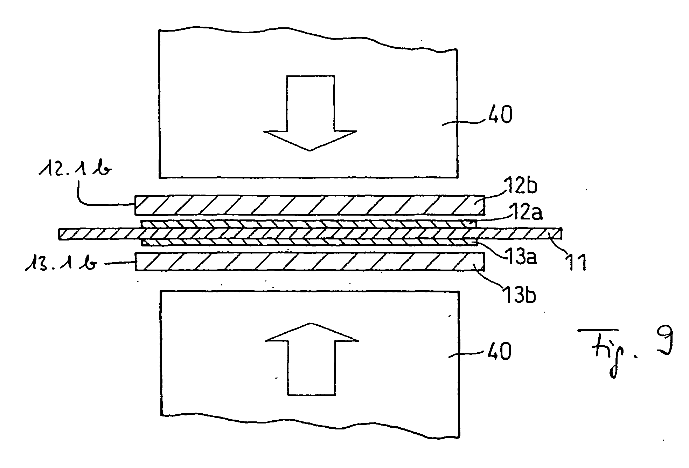

Fig. 2 is a longitudinal section of MEA 10. This MEA 10 comprises the polymer electrolyte membrane 11, the cathode 12 and the anode 13 sandwiching thereof, as well as a pair of gaskets 14 arranged on the peripheral part of an electrode. Fig. 3 is a front view of the cathode side separator plate, and Fig. 4 is a front view of the anode side separator plate. Fig. 5 is a cross-section drawing of MEA 10, the cathode side separator plate 20 and the anode side separator plate 30 sandwiching thereof based on the V-V section in Fig. 3.

The cathode side separator plate 20 comprises a pair of manifold openings 22 for oxidizing gas, a pair of manifold openings 23 for fuel gas, a pair of manifold openings 24 for cooling water and the gas passage 26 connecting manifold openings for oxidizing gas to one another. The cathode side separator plate 20 is further provided with a concave portion 28 on the part for the cathode corresponding to the peripheral part of the gas diffusion layer. The gas diffusion layer meets the area surrounded by a dotted line denoted by 29 in the drawing. The concave portion 28 is not arranged on the part connecting with the manifold opening of the gas passage 26.

Similarly, the anode side separator plate 30 comprises the manifold opening 32 for oxidizing gas, the manifold opening 33 for fuel gas, a pair of manifold openings 34 for cooling water, and the gas passage 35 connecting manifold openings for fuel gas to one another.

The anode side separator plate 30 is further provided with the concave portion 37 on the part for the anode corresponding to the peripheral part of the gas diffusion layer. The gas diffusion layer meets the area surrounded by a dotted line denoted by 39 in the drawing. The concave portion 37 is not arranged on the part connecting with the manifold opening of the gas passage 35. Edge portions of cathode 12 and of anode 13 are referred to as 12.1 and 13.1, respectively in figures 5 to 8.

In the example shown in Fig. 5, the depth of the concave portions 28 and 37 is reduced towards the center of the electrode. In this invention, a separator plate contacting the peripheral edge face of at least one side of the electrode is provided with a concave portion. It is preferred that the depth t of this concave portion, which the edge of the gas diffusion layer contacts, is 80 - 120% of the dimension of the gas diffusion layer when it is compressed by the fastening pressure of fuel cells being laminated. When the depth is less than this dimension, the gas diffusion layer is overcompressed at the edges, reducing the effect of preventing damage to the electrolyte membrane. When the depth of the concave portion is greater than this dimension, no pressure condition at the edges remains unchanged, and yet the thickness of the separator plate itself would have to be increased to ensure the strength of the separator plate resulting in more disadvantages.

As shown in Fig. 5-7, the shape of the concave portion may be changed accordingly into various shapes. Fig. 6 shows an example of arranging the concave portions 28A and 37A having a hemicycle section shape and Fig. 7 shows an example of arranging the concave portion 28B and 37B having an oblong section shape. The shapes of the concave portion are not limited to the above as long as they prevent excessive pressure on the edges of the gas diffusion layer. However, the shapes shown in Fig. 5 allow for the pressure on the edges of the concave portion to be gradually changed, preventing any damage to the electrolyte membrane and/or the gas diffusion layer inflicted by the edges of the concave portion.

The anode side separator plate and the cathode side separator plate of the fuel cells are integrated through a gasket to prevent gas leaks. There are two configurations for the concave portion of the separator plate and gasket. They are: a configuration in which the gasket is formed outwards from the concave portion and a configuration in which the gasket is formed inwards from the concave portion. When a gasket is placed outwards from a concave portion, there would be no problem with the sealability; however, it is conceivable that gas flows within the concave portion instead of flowing within the gas passage. Particularly when the depth of the concave portion is deep enough to create a space between the gas diffusion layer and the separator plate, the impact will be greater. Since gas flows into the concave portion when the concave portion is formed on the part of the gas passage that guides gas from the manifold opening to the reactive part, the gas bypassing can be prevented by not arranging the concave portion in this location, as shown in Fig. 3 and 4, when placing the gasket outwards. In this case, strong pressure results at the edges of the gas diffusion layer in the gas passage. However, the ratio of the portion under pressure against the edge circumference is very small and damage to the electrolyte membrane can be sufficiently prevented.

At the same time, when a gasket is placed inwards of a concave portion, the sealability may not be maintained as the gasket is applied over the gas diffusion layer, which may not be sufficiently squashed. In this case, it is preferable for the gas diffusion layer to be impregnated with a dense substance. A dense substance is impregnated into 16 and 17 in Fig. 8 of the cathode 12 and the anode 13 respectively. Fluorocarbon resins such as polytetrafluoroethylene, a fluorinated ethylene propylene compound, and a vinylidene fluoride system, fluorocarbon rubber, silicone rubber may be used as dense substances.

Furthermore, for the process for the production of fuel cells, lamination of the separator plate and gasket is commonly carried out with an electrolyte membrane, a catalyst layer and a gas diffusion layer, which are integrated in advance using a method such as thermocompression. In this integration process, if pressure is applied to the edges of the gas diffusion layer the electrolyte membrane may easily be damaged. Accordingly, even in this process of integration, it is preferable not to apply strong pressure on the edges of the gas diffusion layer.

In particular, as shown in Fig. 9, when the electrolyte membrane 11, the catalyst layers 12a and 13a as well as the gas diffusion layers 12b and 13b are laminated and hot-pressed, the compressed part should be arranged to be inwards of the edge of the gas diffusion layer. In other words, the gas diffusion layer should be made slightly larger than the press 40. The damage to the electrolyte membrane can be prevented by making the gas diffusion layer protrude out of the press 40 by approximately 3 - 5mm. Edge portions of gas diffusion layers 12b and 13b are referred to as 12.1 b and 13.1 b, respectively.

### Examples

Preferred embodiments to this invention are explained in detail with reference to the drawings.

### Example 1

First, the method for the production of the membrane-electrode assembly (MEA) is described.

Water-repellent ink is prepared by adding 15 wt%, based on the dry weight, of an aqueous dispersion of polytetrafluoroethylene (PEFE), which is a binder, to acetylene black (DENKA black, DENKI KAGAKU KOGYO KABUSHIKI KAISHA). This mixing operation was performed by dispersing for 30 minutes using a colloid mill. This resulting water-repellent ink was applied onto one surface of carbon paper, 300 µm thick; heat-treated by a hot air dryer at 150 °C and further baked at 350 °C and baked for 2 hours to obtain a gas diffusion layer. The amount of ink applied is set to 5 mg per square cm. This was then punched out in the given size using a punching die.

At the same time, catalyst layers are formed on both sides of the polymer electrolyte membrane (Nafion112membrane, Dupont, U.S.A.). These catalyst layers are formed from a mixture of 70 parts by weight of electrically conductive micronized carbon powder (KETJENBLACK EC, Lion Corporation) to which a platinum catalyst supported in a weight ratio of 1:1 and 30 parts by weight of polymer electrolyte membrane similar to said electrolyte membrane.

Said gas diffusion layer was lapped over the catalyst layer of the polymer electrolyte membrane and assembled by pressing for 5 minutes at 100 °C and a pressure of 1 MPa to produce MEA.

The dimension of the press surface used for the above, as shown in Fig. 9, was smaller by 8 mm than that of the gas diffusion layer, in both width and length, and care was taken to ensure that the press surface would not extend over the peripheral edge of the gas diffusion layer.

First of all, the depth of the concave portion of the separator plate was examined.

The cell mechanism was chosen to be the same as in Fig. 5 and the mechanism of the gas passage from the manifold opening to the reactive part was also chosen to be the same, with the concave portion formed. The gas diffusion layer used herein comprised carbon paper, 300µm thick, as a substrate and a water-repellent layer, 80µm thick, the total thickness being 380µm. When this layer was compressed with a pressure of 1 MPa, i.e. the same as the fastening pressure of fuel cells, the thickness was reduced down to 330µm. In other words, the thickness was reduced by 50µm. This thickness is expressed as "s".

Consequently, cell characteristics based on the various depths of the concave portion of the separator plate "t" = 30, 40, 50, 60µm were investigated. Furthermore, as comparative example, a separator plate without a concave portion (t=0) was also produced.

A fuel cell was made by the integration of components: sandwiching MEA between separator plates with a fluorocarbon rubber gasket.

The evaluation conditions are as follows: high moisture content, pure hydrogen gas was supplied to the anode, thus raising the dew point to 65 °C, high-humidity air was supplied to the cathode, thus raising the dew point to 70 °C respectively, and setting the cell temperatures at 70 degree-C, the fuel gas utilization rate at 70% and the air utilization rate at 40 % respectively.

10 electrical cells were produced respectively and the cell characteristics were compared based on the average value of the 10 cells.

Table 1 shows the "t" value, the ratio of "t" against the compressed thickness of the gas diffusion layer "s", the initial open-circuit voltage, the voltage ratio between the voltage with a 40% air utilization rate and the voltage with 70% when discharging at 0.2A/cm2 (hereinafter referred as "air utilization rate characteristics").

**Table 1**

| s = 50 µm | | | |
|---|---|---|---|
| Depth "t" (µm) | t/s (%) | Open-Circuit Voltage (mV) | Voltage Ratio(%) |
| 0 | 0 | 883 | 98.2 |
| 30 | 60 | 903 | 98.1 |
| 40 | 80 | 956 | 98.2 |
| 50 | 100 | 960 | 97.8 |
| 60 | 120 | 963 | 96.2 |
| 80 | 160 | 963 | 89.1 |

In the area where the depth of the concave portion is 40 - 60µm, i.e. t/s is 80 - 120%, better results regarding the open-circuit voltage and the air utilization rate characteristics were obtained. However, when the depth of the concave portion is less, it was observed that the membranes were damaged due to the pressure applied at the edges and that the open-circuit voltage is reduced. In this case the open-circuit voltage fell below 950 mV and/or the short-circuit currents flowing in the membrane became excessive, and a decrease of the power generating efficiency as well as a deterioration of the electrolyte membrane because of local heat generation was observed.

On the other hand, when the depth of the concave portion was greater, a deterioration of the air utilization rate characteristics was observed, caused by the reduction of the actual gas flow rate due to the influence of gas flowing within the concave portion. The reason for this is that the ability to discharge water generated by the reaction was reduced due to the decrease of the pressure of the gas passing through the passage, and when the voltage ratio fell below 95 %, the oscillation of the voltage due to fluctuations of the gas supply became significant. In the worst case, the lower threshold value of the voltage was reached leading to a stoppage of the system. Accordingly, the most favorable characteristics were obtained for a value of t/s between 80 and 120 %.

The results for the case of s = 30 µm and 80 µm respectively are shown in Tables 2 and 3.

**Table 2**

| s = 30 µm | | | |
|---|---|---|---|
| Depth "t" (µm) | t/s (%) | Open-Circuit Voltage (mV) | Voltage Ratio(%) |
| 0 | 0 | 892 | 99.1 |
| 10 | 33 | 912 | 98.9 |
| 25 | 83 | 960 | 98.8 |
| 30 | 100 | 965 | 98.5 |
| 35 | 117 | 965 | 98.0 |
| 40 | 133 | 966 | 91.2 |

**Table 3**

| s=80 µm | | | |
|---|---|---|---|
| Depth "t" (µm) | t/s (%) | Open-Circuit Voltage (mV) | Voltage Ratio(%) |
| 0 | 0 | 863 | 98.0 |
| 50 | 63 | 892 | 98.0 |
| 65 | 81 | 950 | 97.8 |
| 80 | 100 | 963 | 97.2 |
| 95 | 119 | 965 | 95.5 |
| 110 | 138 | 965 | 90.3 |

In the case of s = 30 µm, carbon paper with a thickness of 200 µm was used instead of the carbon paper used in previously described example 1. A thickness of 280 µm after forming the water-repellent layer in the same manner was compressed to 250 µm by applying a pressure of 1 MPa. In the case of s = 80 µm, a gas diffusion layer of 380 µm was used and the applied pressure was set to be 1.5 MPa. In this case, the gas diffusion layer was compressed to 300 µm. In both cases, excellent characteristics were observed between approximately 80 to 120 % for t/s, and it was understood that the same characteristics are obtained when the material of the gas diffusion layer or the compression ratio is changed as well.

### Example 2

Next, for the case of t = 60 µm in example 1, an evaluation of the cells was performed by using a separator plate with a constitution where no concave portion was provided in the gas passage part from the manifold to the reactive part, as is shown in figures 3 and 4. With the exception of the alteration of the separator plate, the cells were constituted in the same manner as in example 1. As a result, the open-circuit voltage changed from 963 mV to 962 mV and almost no influence was observed. On the other hand, the air utilization rate characteristics improved from 96,2 % to 97,9 % and the effect of the suppression of gas flowing in a concave portion appeared.

### Example 3

As shown in Fig. 8, the constitution in which a gasket was placed inwards of a concave portion was examined.
The depth of the concave portion was set as 60µm. It was constituted such that the gasket was fitted in another concave portion provided on the separator plate, and the thickness of the gasket was adjusted such that it protruded from the separator plate by 100µm. The cells were constituted in the same manner as in Example 1, with the exception of the altered gasket shape. As a result, the open-circuit voltage showed a better value of 960mV; however, the air utilization rate characteristic was reduced to 95.3%.

This is conceivably due to gas leaking out through the gas diffusion layer.

Then, fluorocarbon rubber was injected into the part contacting the gasket of the gas diffusion layer, and filled. Using this gas diffusion layer, a similar experiment was conducted to find that the air utilization rate characteristics improved to 98.0%.

### Example 4

The process in which membranes, electrodes, and gas diffusion layers are integrated was examined. In example 1, the dimension of the press surface used for the above was smaller by 8 mm than that of the gas diffusion layer, in both width and length, and care was taken to ensure that the press surface would not extend over the peripheral edge of the gas diffusion layer. In this example, using a press machine with the press surface greater than the gas diffusion layer, the integration of membranes, electrodes, and gas diffusion layers was performed. The integration condition was same as in Example 1, 5 minutes at 100 °C at a pressure of 1 MPa.

The cells were formed in the same way as in Example 1, with the exception of the depth of the concave portion of the separator plate being 60µm. The result indicated a reduction in the open-circuit voltage from 963mV in Example 1 to 931 mV. Accordingly, it is conceivable that the damage to the membranes was prevented and the open-circuit voltage was improved by not applying any pressure on the edges of the gas diffusion layer during the integration process.

### The Effect of the Invention

As described above, this invention can prevent the deterioration in the performance due to damage to the polymer electrolyte membrane caused by burrs on the edges of the gas diffusion layer.

### Brief Description of the Drawings

Fig. 1
   This is a longitudinal section showing a typical constitution of polymer electrolyte fuel cells.
Fig. 2
   This is a simplified longitudinal section of MEA of fuel cells in an embodiment of the invention.
Fig. 3
   This is a front view of a cathode side separator plate in an embodiment of the invention.
Fig. 4
   This is a front view of an anode side separator plate in an embodiment of the invention.
Fig. 5
   This is a V-V section of a polymer electrolyte fuel cell based on the V-V section in Fig. 3 in an embodiment of the invention.
Fig. 6
   This is a section of a relevant part of a polymer electrolyte fuel cell in an embodiment of the invention.
Fig. 7
   This is a section of a relevant part of a polymer electrolyte fuel cell in another embodiment of the invention.
Fig. 8
   This is a front view of a relevant part of a polymer electrolyte fuel cell in another embodiment of the invention.
Fig. 9
   This is a longitudinal section showing the manner in which MEA is integrated in an embodiment of the invention.

### Description of Notations

- 10: MEA
- 11: Polymer electrolyte membrane
- 12: Cathode
- 12.1: Edge portion of cathode 12
- 12a, 13a: Catalyst layer
- 12b, 13b: Gas diffusion layer
- 13: Anode
- 13.1: Edge portion of anode 13
- 14: Gasket
- 20: Cathode side separator plate
- 26, 35: Gas passage
- 28, 37: Concave portion
- 30: Anode side separator plate
- 40: Press

## Claims

1. A fuel cell comprising an electrode (12, 13), said electrode having an edge portion (12.1, 13.1, 12.1b, 13.1b) defining an inner portion and said electrode being under pressure,
**characterised in that**
at least a part of said edge portion is under less pressure as compared to at least a part of said inner portion.

2. The fuel cell of claim 1, **characterised by** a pressure means (20, 30) adapted to exert said pressure on said electrode (12, 13).

3. The fuel cell of claim 2, **characterised in that** said pressure means (20, 30) is adapted to separate the fuel cell from a neighbour fuel cell in a fuel cell stack.

4. The fuel cell of claims 2 or 3, **characterised in that** said pressure means (20, 30) comprises a recess (28, 37) facing and overlapping said edge portion (12.1, 13.1, 12.1b, 13.1 b) and extending parallel therewith.

5. The fuel cell of claim 4, **characterised in that** said recess (28, 37) has a wedge-like contour.

6. The fuel cell of claim 4, **characterised in that** said recess (28A, 28B, 37A, 37B) has a hemicycle or oblong contour.

7. The fuel cell of any of claims 4 to 6, **characterised in that** said electrode (12, 13) comprises a gas diffusion layer (12b, 13b), wherein the depth (t) of said recess is 80 to 120 % of the thickness (s) of said gas diffusion layer under said pressure.

8. The fuel cell of any of claims 4 to 7, **characterised in that** no recess overlaps with a channel (26, 35) adapted to supply a fluid to said electrode (12, 13) or to remove a fluid therefrom.

9. The fuel cell of any of claims 2 to 8, **characterised by** a sealing means (14) abutting on said pressure means (20, 30) with a first side and abutting on a membrane (11) of said fuel cell with a second side.

10. The fuel cell according to any of claims 2 to 9, **characterised by** a sealing means (14C) abutting on said pressure means (20, 30) with a first side and abutting on said electrode (12, 13) with a second side.

11. The fuel cell of claim 10, **characterised in that** said electrode (12, 13) is densified in a region (16, 17) on which said sealing means (14C) abuts.

12. The fuel cell of any preceding claim, **characterised in that** it is a polymer electrolyte fuel cell.

13. A method of producing a fuel cell comprising an electrode (12, 13), said electrode having an edge portion (12.1, 13.1, 12.1b, 13.1b) defining an inner portion, said method including the step of applying pressure to said electrode,
**characterised in that**
a pressure applied to at least a part of said edge portion is smaller than a pressure applied to at least a part of said inner portion.

14. The method of claim 13, **characterised in that** a contour of a means (40) for applying said pressure does at least partially not overlap said edge portion (12.1, 13.1, 12.1 b, 13.1 b).
